# EUROPEAN PATENT APPLICATION

(11) **EP 2 713 294 A2**
(43) Date of publication of application: **02.04.2014**
(21) Application number: 11789230.7
(22) Date of filing: 01.06.2011
(51) Int. Cl.: G06F 21/00, G06F 3/041

(54) **TERMINAL AUTHENTICATION METHOD AND DEVICE THEREOF**

(71) Applicant: Huawei Device Co., Ltd., Shenzhen, Guangdong 518129 (CN)
(72) Inventor: WU, Gang, Shenzhen Guangdong 518129 (CN)
(74) Representative: Pfenning, Meinig & Partner GbR
(86) International application number: PCT/CN2011/075101
(87) International publication number: WO 2011/150851

(57) **Abstract**

The present invention discloses a terminal authentication method and device. The method includes: sensing, by a terminal, pressure information through a touch screen, where the pressure information includes a pressing strength value of a pressed contact when a user presses the touch screen; and comparing, by the terminal, the sensed pressure information with an authentication password stored in the terminal by using the sensed pressure information as an authentication password; if the sensed pressure information matches the stored authentication password, determining, by the terminal, that password authentication succeeds; otherwise, determining, by the terminal, that the password authentication fails. With the method and the device provided by the present invention, the terminal is authenticated on the premise of high security and convenient authentication.

## Description

This application is a continuation of International Application No. PCT/CN2011/075101, filed on June 1, 2011, which is hereby incorporated by reference in their entireties.

### FIELD OF THE INVENTION

The present invention relates to authentication technologies of the communication field, and in particular, to a terminal authentication method and device.

### BACKGROUND OF THE INVENTION

With the development of communications technologies, there are more and more types of terminals capable of accessing a communication system, and functions thereof are more and more powerful. Terminals using a touch screen have become a development trend. A terminal may receive, by using a touch screen, an operation command from a user, and then implement the user's functional operation on the terminal. In this way, the user can control the terminal to perform a variety of functional operations as long as the user taps the touch screen and/or makes an input. Therefore, the touch screen of the terminal is a receiving unit for receiving the operation command. The touch screen can obtain the operation command by parsing a path, a position, and duration of an input made by the user on the touch screen, and transmit the operation command to a processing unit of the terminal for execution.

In use of the terminal, to ensure security of the terminal and prevent a non-owner from using or maliciously modifying data stored in the terminal, it is required to encrypt the terminal. For example, a password is stored in the terminal, and when it is required to use the password, the terminal receives a password entered by the user and compares the password with the password stored in the terminal. If the two passwords are the same, the user is allowed to use the terminal; otherwise, the user is not allowed to use the terminal. A password of the terminal is usually a digital string formed by digits or letters. However, with introduction of a touch screen on a terminal, the password may also be a path input by the user on the touch screen, for example, a path like a letter "z" on the touch screen.

When terminal authentication is performed by using a complicated digital string formed by digits or letters as a terminal password, the input operation is complicated and an error is likely to occur. When a path on the touch screen is used as a password, the input is simple and is easy to remember during the authentication, but security is low and it is easy to crack the password.

Therefore, how to provide an authentication method with high security and convenient authentication on a terminal with a touch screen becomes an urgent problem to be solved.

### SUMMARY OF THE INVENTION

Embodiments of the present invention provide a terminal authentication method and device, which are capable of authenticating a terminal on the premise of high security and convenient authentication.

The technical solutions of the present invention are implemented in the following manners.

A terminal authentication method, including:
sensing, by a terminal, pressure information through a touch screen, where the pressure information includes a pressing strength value of a pressed contact when a user presses the touch screen;
comparing, by the terminal, the sensed pressure information with an authentication password stored in the terminal by using the sensed pressure information as an authentication password; and
if the sensed pressure information matches the stored authentication password, determining, by the terminal, that password authentication succeeds; otherwise, determining, by the terminal, that password authentication fails.

A terminal authentication device, including: a sensing unit, an authentication unit, and a storage unit, where:
the sensing unit is configured to sense pressure information through a touch screen and send the pressure information to the authentication unit, where the pressure information includes a pressing strength value of a pressed contact when a user presses the touch screen;
the storage unit is configured to store an authentication password; and
the authentication unit is configured to receive the pressure information from the sensing unit, and compare the pressure information with the authentication password obtained from the storage unit by using the pressure information as an authentication password; where if the sensed pressure information matches the stored authentication password, the terminal determines that password authentication succeeds; otherwise, the terminal determines that password authentication fails.

In the embodiments of the present invention, by fully utilizing the feature of a touch screen, pressure information sensed by the touch screen is stored on the terminal as an authentication password. During the authentication, the terminal senses pressure information through the touch screen, where the pressure information includes a pressing strength value of a pressed contact when a user presses the touch screen; then, the terminal compares it with the stored authentication password; if the pressure information matches the stored authentication password, the terminal determines that password authentication succeeds; otherwise, the terminal determines that password authentication fails. In this way, during the terminal authentication, it is not required that the user remembers and enters a complicated digital string as a password, and the terminal authentication just requires a simple operation and provides high user experience, thereby solving the problem in the prior art that security is low when merely a path on the touch screen is used a password. Therefore, the method and the device provided by the present invention are capable of authenticating the terminal on the premise of high security and convenient authentication.

### BRIEF DESCRIPTION OF THE DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and persons skilled in the art may still derive other drawings from these accompanying drawings without creative efforts.
FIG. 1 is a flowchart of a terminal authentication method according to an embodiment of the present invention;
FIG. 2 is a schematic structural diagram of a terminal authentication device according to an embodiment of the present invention;
FIG. 3 is a schematic diagram of a multiple-choice setting interface showing authentication password types and provided by a receiving unit of a touch screen to a user according to a first specific embodiment of the present invention;
FIG. 4 is a schematic diagram of an interface showing positions of multiple pressed contacts and provided by a receiving unit of a touch screen to a user according to a first specific embodiment of the present invention;
FIG. 5 is a schematic diagram of a setting interface for each selected pressed contact and provided by a receiving unit of a touch screen to a user according to a first specific embodiment of the present invention;
FIG. 6 is a schematic diagram of an authentication password input interface for a single-point touch position (including strength and duration) and provided by a receiving unit of a touch screen to a user according to a first specific embodiment of the present invention;
FIG. 7 is a schematic diagram of a multiple-choice setting interface showing authentication password types and provided by a receiving unit of a touch screen to a user according to a second embodiment of the present invention;
FIG. 8 is a schematic diagram of an interface showing a position of a single pressed contact and provided by a receiving unit of a touch screen to a user according to a second specific embodiment of the present invention;
FIG. 9 is a schematic diagram of a setting interface for strength and duration of a selected pressed contact and provided by a receiving unit of a touch screen to a user according to a second embodiment of the present invention; and
FIG. 10 is a schematic diagram of an authentication password input interface for a single-point touch position (including strength and duration) and provided by a receiving unit of a touch screen to a user according to a second specific embodiment of the present invention.

### DETAILED DESCRIPTION OF THE EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

To solve the problem in the prior art that a user needs to remember and enter a complicated digital string as a password during terminal authentication and solve the problem of low security in the prior art when merely a path on the touch screen is used as a password, an embodiment of the present invention provides a terminal authentication method, to make the terminal authentication easy to perform and provide high user experience. By fully utilizing the feature of a touch screen, pressure information sensed by the touch screen is stored on a terminal as an authentication password. During the authentication, the terminal senses pressure information through the touch screen, where the pressure information includes a pressing strength value of a pressed contact when a user presses the touch screen; then, the terminal compares the pressure information with the stored authentication password; if the pressure information matches the stored authentication password, the terminal determines that password authentication succeeds; otherwise, the terminal determines that password authentication fails.

Herein, the pressing strength value of the pressed contact includes a pressure value and/or a pressure intensity value generated at the pressed contact; the stored authentication password is preset pressure information, and the preset pressure information includes a pressure value and/or a pressure intensity value.

In the present invention, the pressure information further includes any one or a combination of multiple items among a position of a pressed contact, a duration of pressing a contact, the number of pressed contacts, and a sequence of pressing pressed contacts of the touch screen.

In the present invention, the touch screen of the terminal is a resistive touch screen.

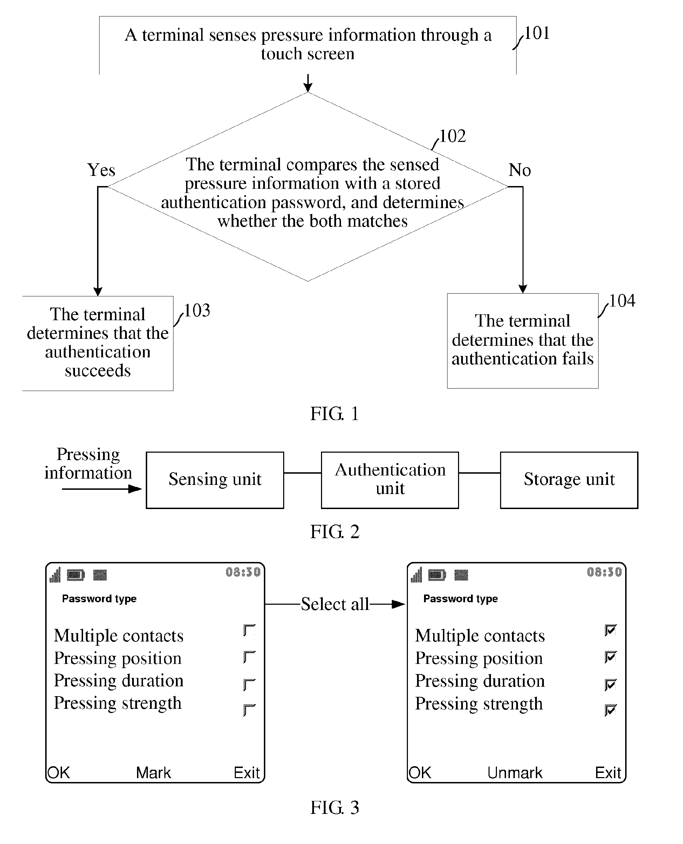

FIG. 1 is a flowchart of a terminal authentication method according to an embodiment of the present invention, including the following specific steps.

Step 101: A terminal senses pressure information through a touch screen.

In this step, the pressure information at least includes a pressing strength value of a pressed contact when a user presses the touch screen, and the pressing strength value may include a pressure value and/or a pressure intensity value.

In this step, when the touch screen of the terminal is a resistive touch screen, the terminal may detect, through the resistive touch screen, a pressing strength value of a pressed contact on a surface of the touch screen, and store the pressing strength value as an authentication password for use during authentication.

Step 102: The terminal compares the sensed pressure information with a stored authentication password, and determines whether the sensed pressure information matches the stored authentication password; if yes, perform step 103; otherwise, perform step 104.

Before this step, the terminal pre-stores an authentication password, and the stored authentication password is preset pressure information, including a pressure value and/or a pressure intensity value.

In this step, the matching includes the following cases: the sensed pressure information is absolutely the same as the stored authentication password, or a difference between the sensed pressure information and the stored authentication password falls within a set accurate difference range, which is not limited herein.

Step 103: The terminal determines that the authentication succeeds.

After this step, the terminal executes, according to an operation command subsequently input by the user, an operation corresponding to the operation command.

Step 104: The terminal determines that the authentication fails.

After this step, the terminal rejects an operation command which is subsequently input or displays prompt information to notify the user that an inputted password is erroneous.

In this embodiment, a receiving unit of the touch screen may sense pressure information and then identify the pressure information as an authentication password. During the sensing, in addition to a pressing strength value, the pressure information may further include one or a combination of multiple items among a pressing position, a pressing duration, pressing strength, the number of pressed contacts, and a sequence of pressed contacts of the touch screen. Then, the receiving unit of the touch screen identifies by parsing, in polling and interrupting triggering mode, feature events of the touch screen, such as EVT_TOUCH_DOWN (EVT_TOUCH_DOWN), EVT_TOUCH_MOVE (EVT_TOUCH_MOVE), and EVT_TOUCH_UP (EVT_TOUCH_MOVE), and then determines the pressure information according to these events.

A process of recording feature information of the touch screen is described through a specific example below.

First, when detecting a pressed contact on the surface of the touch screen, the terminal generates an interrupt, identifies a position of an initial pressed contact, and identifies a pressing strength value of the initial pressed contact.

Then, when it is detected that the pressed contact on the surface of the touch screen is sustained and effective, the interrupt of the terminal is disabled; a timer set by the terminal determines a move event of the pressed contact in polling mode, identifies a position of a moved pressed contact, and identifies a pressing strength value of the moved pressed contact.

Finally, when the timer set by the terminal detects, in polling mode, that the pressed contact on the surface of the touch screen disappears, the terminal determines an EVT_TOUCH_UP, and records an identified position of the initial pressed contact, a pressing strength value of the initial pressed contact, a position of the moved pressed contact, and a pressing strength value of the moved pressed contact in a touch action.

If the pressure information is information about multiple pressed contacts, the operation is executed multiple times according to the foregoing process, so as to obtain pressure information about multiple actions of pressing multiple pressed contacts.

If the pressure information further includes pressing duration information, the duration recorded by the timer of the terminal is recorded according to the foregoing process, so as to obtain the pressing duration information.

If the pressure information further includes a pressing strength value, a pressure value and/or a pressure intensity value may also be obtained in polling mode according to the foregoing process, so as to obtain the pressing strength value.

In this embodiment, when the authentication password is stored, the authentication password can be stored according to the foregoing process or the authentication password can be directly input and stored, which is not limited herein.

In this way, it can be achieved that the authentication password is pressure information about multiple touch actions, thereby ensuring high security of the authentication and enabling the authentication to be difficult to crack.

FIG. 2 is a schematic structural diagram of a terminal authentication device according to an embodiment of the present invention. The terminal authentication device includes a sensing unit, an authentication unit, and a storage unit, where:
the sensing unit is configured to sense pressure information through a touch screen and send the pressure information to the authentication unit, where the pressure information includes a pressing strength value of a pressed contact when a user presses the touch screen;
the storage unit is configured to store an authentication password; and
the authentication unit is configured to receive the pressure information from the sensing unit, and compare the pressure information with the authentication password obtained from the storage unit by using the pressure information as an authentication password; where if the sensed pressure information matches the stored authentication password, the terminal determines that password authentication succeeds; otherwise, the terminal determines that password authentication fails.

In this device embodiment, the storage unit includes a sub-storage unit, configured to store preset pressure information as an authentication password, where the preset pressure information includes a pressure value and/or a pressure intensity value.

The pressing strength value sensed by the sensing unit includes a pressure value and/or a pressure intensity value generated at the pressed contact.

In this device embodiment, the sensing unit further includes a detection unit, an interrupt unit, a polling unit, and a recording unit, where:
the detection unit is configured to instruct the interrupt unit to generate an interrupt when detecting a pressed contact on a surface of a touch screen, identify a position of an initial pressed contact, and identify a pressing strength value of the initial pressed contact; when detecting that the pressed contact on the surface of the touch screen is sustained and effective, instruct to disable the interrupt of the interrupt unit, and instruct the polling unit to perform an operation in polling mode; when detecting that the pressed contact on the surface of the touch screen disappears, determine an EVT_TOUCH_UP, and instruct the recording module to record;
the recording module is configured to record an identified position of the initial pressed contact, a pressing strength value of the initial pressed contact, a position of a moved pressed contact, and a pressing strength value of the moved pressed contact in a touch action;
the interrupt unit is configured to generate an interrupt under the instruction of the detection unit, where the interrupt is disabled under the execution of the detection unit; and
the polling unit is configured to determine, in polling mode, a move event of the pressed contact within a set duration under the instruction of the detection unit, identify the position of the moved pressed contact, and identify the pressing strength value of the moved pressed contact.

The detection unit, the interrupt unit, the polling unit, and the recording unit execute the operations once or multiple times, to record pressure information of one or more touch actions.

In this device embodiment, an execution unit is further included. The execution unit is configured to execute, according to an operation command subsequently input by a user, an operation corresponding to the operation command, when authentication by the authentication unit succeeds.

An embodiment of the present invention further provides a terminal device. The terminal device includes a shell and a circuit board, and further includes any one of all the resistive touch screens according to the foregoing embodiments of the present invention. The resistive touch screen is disposed on the shell and the circuit board is disposed inside the shell. A processing circuit is disposed on the circuit board (usually a printed circuit board) according to the embodiment of the present invention. Data input through the resistive touch screen is processed by using the processing circuit, and/or a result of the processed data is output through the resistive touch screen.

The foregoing terminal device may be a mobile phone, a man-machine interaction terminal, an electronic book, or another terminal device with a display function. If the terminal device is a mobile phone, the mobile phone further includes a radio frequency circuit, a microphone, a loudspeaker, and a power supply, so as to implement the basic function of the mobile phone. The radio frequency circuit, the microphone, the loudspeaker, and the power supply each are described in the following.

The radio frequency circuit is mainly configured to establish communication between the mobile phone and a wireless network, and implement data reception and transmission between the mobile phone and the wireless network.

The microphone is configured to collect sound and convert the collected sound into sound data, so that the mobile phone transmits, through the radio frequency circuit, the sound data to the wireless network.

The loudspeaker is configured to restore the sound data, received by the mobile phone from the wireless network through the radio frequency circuit, to sound and play the sound for a user.

The power supply is mainly configured to supply power to each circuit or element of the mobile phone, to ensure the normal operation of the mobile phone.

A structure of the processing circuit in the terminal device includes the sensing unit and the authentication unit shown in FIG. 2, and the processing circuit is configured to perform, according to the process shown in FIG. 2, authentication processing on a terminal.

The description is made through two specific examples below.

In a first specific example, a combination of a pressing position, a pressing duration, pressing strength, and the number of multiple pressed contacts is used as an authentication password for illustration.

### a. Storing of an authentication password:

First, as shown in FIG. 3, the terminal displays an authentication password setting interface on the screen, so that the user can select an authentication password. In the example, the user selects, through the touch screen, a combination of a pressing position, a pressing duration, a pressing strength value, and the number of pressed contacts as an authentication password.

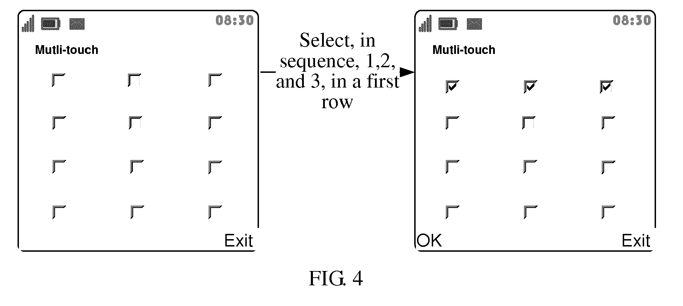

Second, as shown in FIG. 4, the terminal displays a multi-pressed contact selection interface on the screen, so that the user can select pressing positions of multiple pressed contacts. In the example, the user selects, through the touch screen, three pressed contacts in a first row.

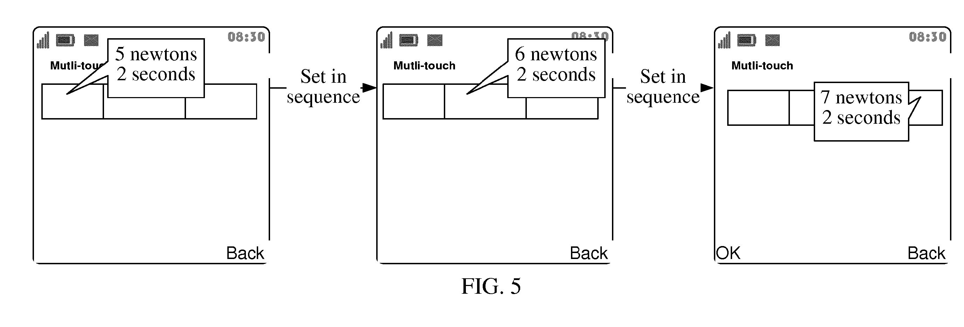

Finally, as shown in FIG. 5, the terminal displays a multi-pressed contact setting interface on the screen. The user sets a pressing duration and a pressing strength value for each selected pressed contact. Information about the pressing duration, the pressing strength, the pressing position and sequence is recorded through the pressing of the user, and then the information is stored.

In this way, the terminal stores the authentication password.

In the embodiment, the selection of the pressing position and the selection of the pressing duration and the pressing strength value are performed successively. However, in actual operations, the more convenient setting mode is as follows: the user directly presses a point on the left interface shown in FIG. 4, and the terminal records the pressing position, the pressing duration, and the pressing strength value of this contact; in this way two successive processes are not required. The user may select, through the pressing, one or more pressed contacts, so as to form a preset authentication password, and details are not described herein again.

### b. Authentication process of the terminal:

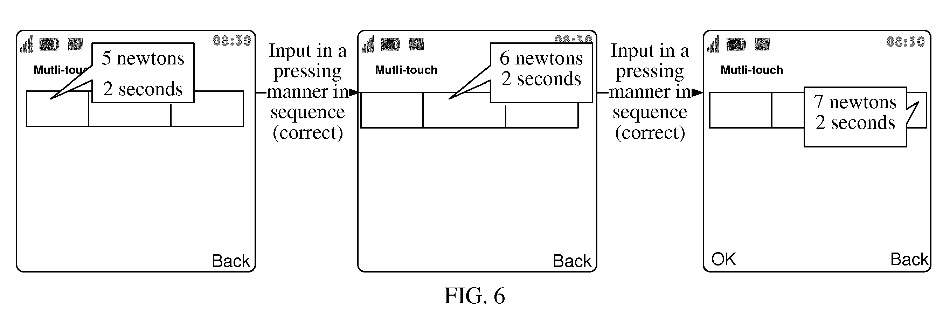

As shown in FIG. 6, the terminal displays an authentication password input interface on the screen, and the user presses the touch screen. As shown in the figure, in the case that a first contact on the left interface is pressed, the adopted pressing strength value is 5 newtons, and the pressing duration is 2 seconds; in the case that a second contact in the middle interface is pressed, the adopted pressing strength value is 6 newtons, and the pressing duration is 2 seconds; and in the case that a third contact on the right interface is pressed, the adopted pressing strength value is 7 newtons, and the pressing duration is 2 seconds. The terminal senses the pressure information through the touch screen and compares the pressure information with the stored authentication password to determine whether the pressure information is the same as the stored authentication password; if the both are the same (herein, the case that the both are the same is indicated), the terminal determines that the authentication succeeds.

In a second specific example, a combination of a pressing position, a pressing duration, a pressing strength value, and a single pressed contact is used as an authentication password for illustration.

### a. Storing of an authentication password:

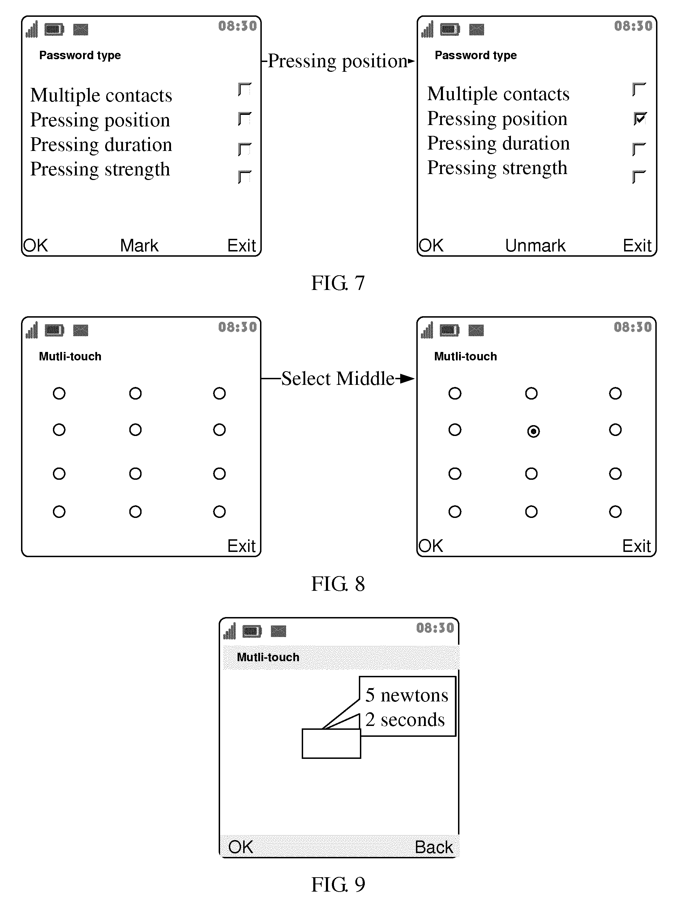

First, as shown in FIG. 7, the terminal displays an authentication password setting interface on the screen, so that the user can select an authentication password. In the example, the user selects, through the touch screen, a combination of a pressing position, a pressing duration, a pressing strength value, and the number of single pressed contacts as an authentication password.

Second, as shown in FIG. 8, the terminal displays a multi-pressed contact selection interface on the screen, so that the user can select pressing positions of multiple pressed contacts. In the example, the user selects, through the touch screen, a middle pressed contact in a second row.

Finally, as shown in FIG. 9, the terminal displays a multi-pressed contact setting interface on the screen. The user sets a pressing duration and a pressing strength value for a selected pressed contact. The pressing duration and the pressing strength are recorded through the pressing of the user, and then are stored.

In this way, the terminal stores the authentication password.

### b. Authentication process of the terminal:

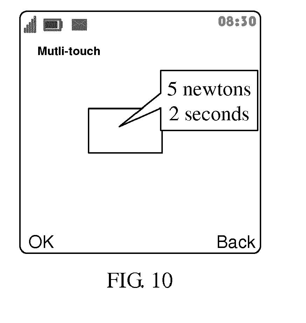

As shown in FIG. 10, the terminal displays an authentication password input interface on the screen, and the user presses the touch screen. As shown in the figure, the pressure information sensed through the touch screen is as follows: for a middle pressed contact in a second row, the pressing strength value is 5 newtons and the pressing duration is 2 seconds. The terminal senses the pressure information through the touch screen and compares the pressure information with the stored authentication password to determine whether the pressure information is the same as the stored authentication password; if the both are the same (herein, the case that the both are the same is indicated), the terminal determines that the authentication succeeds.

Two specific examples are only described above. In actual applications, another combination may also be used as a password, for example, a single or multiple contacts (in sequence or not) + a pressing strength value, a single or multiple contacts (in sequence or not) + a duration value, or multiple contacts + a sequence; in this way, the complexity in an authentication process is increased, security of the authentication is improved, and an authentication error is avoided. Details are not described one by one herein again.

The foregoing description is merely about exemplary embodiments of the present invention, but is not intended to limit the present invention. Any modification, equivalent replacement, or improvement made within the idea and principle of the present invention should fall within the protection scope of the present invention.

## Claims

1. A terminal authentication method, comprising:
sensing, by a terminal, pressure information through a touch screen, wherein the pressure information comprises a pressing strength value of a pressed contact when a user presses the touch screen;
comparing, by the terminal, the sensed pressure information with an authentication password stored in the terminal by using the sensed pressure information as an authentication password; and
if the sensed pressure information matches the stored authentication password, determining, by the terminal, that password authentication succeeds; otherwise, determining, by the terminal, that password authentication fails.

2. The authentication method according to claim 1, wherein
the pressing strength value of the pressed contact comprises a pressure value and/or a pressure intensity value generated at the pressed contact; and
the stored authentication password is preset pressure information, wherein the preset pressure information comprises a pressure value and/or a pressure intensity value.

3. The authentication method according to claim 2, wherein the pressure information further comprises any one or a combination of a position of a pressed contact, a duration of pressing a contact, the number of pressed contacts, and a sequence of pressing pressed contacts of the touch screen.

4. The method according to claim 3, wherein the sensing, by the terminal, the pressure information through the touch screen is:
A. when detecting a pressed contact on a surface of the touch screen, generating, by the terminal, an interrupt, identifying a position of an initial pressed contact, and identifying a pressing strength value of the initial pressed contact;
B. when it is detected that the pressed contact on the surface of the touch screen is sustained and effective, disabling the interrupt of the terminal; determining, by a timer set by the terminal, a move event of the pressed contact in polling mode; identifying a position of a moved pressed contact, and identifying a pressing strength value of the moved pressed contact;
C. when the timer set by the terminal detects, in the polling mode, that the pressed contact on the surface of the touch screen disappears, determining, by the terminal, an EVT_TOUCH_UP, recording an identified position of the initial pressed contact, a pressing strength value of the initial pressed contact, the position of the moved pressed contact, and the pressing strength value of the moved pressed contact in a touch action; and
D. performing the process of steps A to C once or multiple times, to obtain pressure information about one or more pressing actions.

5. The method according to claim 1, after the determining, by the terminal, that the password authentication succeeds, further comprising: executing, by the terminal, an operation corresponding to an operation command according to the operation command subsequently input by the user.

6. A terminal authentication device, comprising: a sensing unit, an authentication unit, and a storage unit, wherein
the sensing unit is configured to sense pressure information through a touch screen and send the pressure information to the authentication unit, wherein the pressure information comprises a pressing strength value of a pressed contact when a user presses the touch screen;
the storage unit is configured to store an authentication password; and
the authentication unit is configured to receive the pressure information from the sensing unit, and compare the pressure information with the authentication password obtained from the storage unit by using the pressure information as an authentication password; wherein if the sensed pressure information matches the stored authentication password, the terminal determines that password authentication succeeds; otherwise, the terminal determines that password authentication fails.

7. The device according to claim 6, wherein the storage unit comprises a sub-storage unit, configured to store preset pressure information as an authentication password, the preset pressure information comprises a pressure value and/or a pressure intensity value; and
the pressing strength value sensed by the sensing unit comprises a pressure value and/or a pressure intensity value generated at the pressed contact.

8. The device according to claim 7, wherein the sensing unit further comprises: a detection unit, an interrupt unit, a polling unit, and a recording unit, wherein
the detection unit is configured to instruct the interrupt unit to generate an interrupt when detecting a pressed contact on a surface of the touch screen, identify a position of an initial pressed contact, and identify a pressing strength value of the initial pressed contact; when detecting that the pressed contact on the surface of the touch screen is sustained and effective, instruct to disable the interrupt of the interrupt unit, and instruct the polling unit to perform an operation in polling mode; when detecting that the pressed contact on the surface of the touch screen disappears, determine an EVT_TOUCH_UP, and instruct the recording module to record;
the recording module is configured to record an identified position of the initial pressed contact, a pressing strength value of the initial pressed contact, a position of a moved pressed contact, and a pressing strength value of the moved pressed contact in a touch action;
the interrupt unit is configured to generate the interrupt under the instruction of the detection unit, wherein the interrupt is disabled under the execution of the detection unit;
the polling unit is configured to determine, in polling mode, a move event of the pressed contact within a set duration under the instruction of the detection unit, identify the position of the moved pressed contact, and identify the pressing strength value of the moved pressed contact; and
the detection unit, the interrupt unit, the polling unit, and the recording unit execute the operations once or multiple times, to record pressure information of one or more touch actions.

9. The device according to claim 6, further comprising an execution unit, configured to execute, according to an operation command subsequently input by a user, an operation corresponding to the operation command, when the authentication performed by the authentication unit succeeds.

10. The device according to any one of claims 6 to 9, wherein the device is a mobile phone, the mobile phone further comprises a shell, a circuit board, a resistive touch screen, a processor, a radio frequency circuit, a microphone, a loudspeaker, and a power supply;
the resistive touch screen is disposed on the shell, the circuit board is disposed in space encircled by the shell, and the processor and the radio frequency circuit are disposed on the circuit board;
the processor is configured to process data input through the resistive touch screen, and/or output a result of the processed data through the resistive touch screen;
the radio frequency circuit is configured to establish communication between the mobile phone and a wireless network, and implement data reception and transmission between the mobile phone and the wireless network;
the microphone is configured to collect sound and convert the collected sound into sound data, so that the mobile phone transmits, through the radio frequency circuit, the sound data to the wireless network;
the loudspeaker is configured to restore the sound data, received by the mobile phone from the wireless network through the radio frequency circuit, to sound and play the sound for the user; and
the power supply circuit is configured to supply power to each circuit or element of the mobile phone.
